# EUROPEAN PATENT SPECIFICATION

(11) **EP 3 135 477 B1**
(45) Date of publication and mention of the grant of the patent: **18.04.2018**
(21) Application number: 15182724.3
(22) Date of filing: 27.08.2015
(51) Int. Cl.: B32B 7/10, B32B 27/08, B32B 27/18, B32B 27/28, B32B 27/30, B32B 27/32, B32B 1/08, B32B 27/16

(54) **MULTILAYER ARTICLES WITH IMPROVED THERMAL RESISTANCE CONTAINING ONE OR MORE FLUOROPOLYMERS**
MEHRSCHICHTIGER ARTIKEL MIT VERBESSERTER THERMISCHER BESTÄNDIGKEIT MIT EINEM ODER MEHREREN FLUORPOLYMEREN
ARTICLES MULTICOUCHES PRÉSENTANT UNE MEILLEURE RÉSISTANCE THERMIQUE CONTENANT UN OU PLUSIEURS POLYMÈRES FLUORÉS

(43) Date of publication of application: 01.03.2017
(73) Proprietor: 3M Innovative Properties Company, St. Paul, MN 55133-3427 (US)
(72) Inventor: VAN GOOL, Guy, 9120 Melsele (BE); DAMS, Rudolf, 2070 Zwijndrecht (BE); VERSCHUERE, Alain, 9120 Melsele (BE)
(74) Representative: Kurz, Arnd

(56) References cited:
- EP-A1- 1 454 740
- EP-A1- 1 505 117
- US-A- 4 214 060
- US-A1- 2005 281 973

## Description

### Field

The disclosure relates to multilayer articles having improved thermal resistance. The articles contain at least one curable or cured fluoropolymer. The present disclosure further relates to a method for producing such multilayer articles and their application.

### Background

Fluoropolymers, i.e. polymers having a fluorinated backbone, have been long known and have been used in a variety of applications because of several desirable properties such as heat resistance, chemical resistance, weatherability, UV-stability etc. Various fluoropolymers are for example described in "Modern Fluoropolymers", edited by John Scheirs, Wiley Science 1997.

Partially fluorinated elastomers (FKMs) and perfluorinated elastomers (FFKMs) have been used in the automotive industry since many years, in particular as components of fuel management systems and fuel combustion engines due to their chemical resistance to hydrocarbon fuels. Partially fluorinated elastomers contain comonomers that are not fully fluorinated but contain one or more carbon-hydrogen bond and/or contain one or more hydrocarbon comonomers. The general need for improving efficiency and improving carbon emissions in the automotive industry has led to increased under-the-hood temperatures. Therefore, there is a need to provide article containing fluoroelastomers in under-the-hood applications that have an improved life-time under increased temperatures. In particular this need exists in fluoroelastomer-containing multilayer articles, such as hoses, where a fluoroleastomer layer is bonded to a silicone layer. US 2005/0281973 A1 discloses a hose with low gas permeability comprising a first layer containing an extruded dynamic vulcanizate comprising cured fluorocarbon elastomer particles in a continuous phase of a fluoropolymer material, and an extruded layer applied thereon that comprises a silicone rubber. Examples 1-7 describe first layers all containing carbon black, of the brand Austin Black and MT Black.

### Summary

In one aspect of the following disclosure there is provided a multilayer article, comprising at least one first layer containing a fluoropolymer and at least one second layer containing a silicone resin, said layers are at least partially in contact with each other and form a common interface bonding the layers together, and wherein the at least one first layer further comprises carbon particles of mineralized carbon selected from graphite, coal, coke and charcoal and wherein the fluoropolymer is cured.

In another aspect there is provided a method for producing a multilayer composite article, the method comprising the following steps:
(a) providing a first layer comprising a curable fluoropolymer, a curing agent for curing the fluoropolymer and carbon particles of mineralized carbon selected from graphite, coal, coke and charcoal;
(b) providing a second layer containing a silicone resin;
(c) contacting the layers to form a common interface between the layers bonding the layers;
(d) subjecting at least the first layer to curing.

In yet another aspect there is provided a multilayer hose comprising the multilayer article.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt. %") unless specified otherwise. The amounts of all ingredients gives 100 % wt. unless specified otherwise. If the amounts of ingredients is identified by % mole the amount of all ingredients gives 100 % mole unless specified otherwise. Alternatively, the amounts of ingredients may be indicated by parts per hundred parts of fluoropolymer (phr).

Unless explicitly stated otherwise, all embodiments of the present disclosure can be combined freely.

### Fluoropolymers:

The first layer of the multilayer article comprises at least one curable or cured fluoropolymer. Typically, the amount of fluoropolymer may be more than 50 % by weight, or even more than 75 % by weight based on the total weight of the layer. In one embodiment the first layer contains at least 80 % weight based on the total weight of the composition of fluoropolymers. In one embodiment the first layer consists of one or more fluoropolymers, which means the layer does not contain any other polymers but may contain non-polymeric additives. The fluoropolymer may have a partially or a fully fluorinated backbone, i.e. it may be a partially fluorinated polymer or a perfluorinated polymer. Preferably, the fluoropolymer is partially fluorinated. Suitable fluoropolymers include those having a fluorine content of at least 50 % by weight, preferably at least 66 % by weight. In particular embodiments the fluoropolymers have a fluorine content of from 62 to 72 % by weight, including fluoropolymers with a fluorine content of 66, 69 or 71 % by weight.

Preferably, the fluoropolymers are elastomers. Fluoroelastomers are curable or cured fluoropolymers. Typically, they are substantially amorphous, which means they have no or only a minor crystalline segments. Such materials are elastomeric and are also referred to in the art as fluororubbers. Such fluoroelastomers are known in the art. They typically have a glass transition temperature of below 25 °C.

Suitable fluoropolymers are copolymers and include polymers of one or more fluorinated monomer in combination with one or more other fluorinated monomer and/or one or more non-fluorinated monomers. Examples of fluorinated monomers include fluorinated C₂-C₈ olefins that may or may not have hydrogen and/or chlorine atoms such as tetrafluoroethylene (TFE), chlorotrifluoroethylene (CTFE), 2-chloropentafluoropropene, dichlorodifluoroethylene, vinyl fluoride, vinylidene fluoride (VDF), fluorinated alkyl vinyl monomers such as hexafluoropropylene (HFP); fluorinated vinyl ethers, including perfluorinated vinyl ethers (collectively referred to as PVE) and fluorinated allyl ethers including perfluorinated allyl ethers (collectively referred to as PAE). Suitable non-fluorinated comonomers include vinyl chloride, vinylidene chloride and C₂-C₈ olefins such as ethylene (E) and propylene (P). In particular, the use of comonomers selected from PAE's and PVE's will lower the glass transition temperature and increase the low temperature performance of the polymer.

Specific examples of suitable fluoropolymer include polymers of the following monomer composition: VDF-HFP, TFE-P, VDF-TFE-HFP, VDF-TFE-PVE, TFE-PVE, E-TFE-PVE and any of these aforementioned copolymers further including units derived from a chlorine containing monomer such as CTFE. Still further examples of suitable amorphous copolymers include copolymers having a combination of CTFE with non-fluorinated comonomers as in CTFE-P.

Preferred fluoropolymers generally comprise from 20 to 85 %, preferably 50 to 80 % by moles of repeating units derived from VDF and TFE, which may or may not be copolymerized with one or more other fluorinated ethylenically unsaturated monomer, such as HFP and/or one or more non fluorinated C₂-C₈ olefins, such as ethylene and propylene or one or more PAE's and PVE's or combinations thereof. Such polymers are typically amorphous. The units derived from the fluorinated ethylenically unsaturated comonomer when present is generally between 5 and 45 mole %, preferably between 10 and 40 mole %. The amount of non-fluorinated comonomer when present is generally between 0 and 50 mole %, preferably between 1 and 30 mole %.

In one embodiment specific fluoropolymers include VDF/HFP/TFE terpolymers with a comonomer content in mole % of 40 to 80 / 12 to 25 / 6 to 36 % and may include cure site monomers with the total amount of moles being 100 %.

The fluoropolymers are curable and can be cross-linked (cured). In the multilayer articles and in particular in the finished products containing the multilayer articles, the fluoropolymers are typically present in their cured form, i. e. they have been cross-linked and reacted with one or more curing agents. Typically, the fluoropolymers are already elastic or become elastic after curing or their elasticity can be improved by curing. Preferably, the fluoropolymers are curable (or cured) by a peroxide curing reaction. This means the fluoropolymers are curable (or have been cured) by one or more peroxide curing agents or the radicals generated by the peroxide curing agents. Coagents may be used in combination with peroxide curing agent(s). Fluoropolymers that are curable by peroxide curing reaction typically contain one or more group that is (are) capable of participating in a peroxide curing reaction. Such groups react with the peroxide agent or a radical generated by the curing agent and form cross-links. The polymer may then form a three-dimensional network and becomes elastic or becomes more elastic. Typical groups capable of participating in a peroxide curing reaction include halogens (other than fluorine, and preferably chlorine, bromine and iodine, most preferably bromine and iodine) and nitrile groups. The groups capable of participating in a peroxide curing reaction may be distributed along the polymer chain and/or may be contained in the end groups of the fluoropolymer. Typically, the amount of these groups (in particular bromine and/or iodine) contained in the fluoropolymer is between 0.001 and 5%, preferably between 0.01 and 2.5 %, by weight with respect to the total weight of the fluoropolymer.

To introduce halogens capable of participating in the peroxide curing reaction along the chain, cure-site monomers may be used in the polymerisation of the fluoropolymer (see for instance EP 2 110 251 A1, US Patent No 4,831,085, and US Patent No 4,214,060). Such comonomers include, for example, but are not limited to:
(a) bromo- or iodo- (per)fluoroalkyl-(per)fluorovinylethers having the general formula:

   ZRf-O-CX=CX₂

   wherein each X may be the same or different and represents H or F, Z is Br or I, preferably I, and Rf is a (per)fluoroalkylene containing from 1 to 12 carbon atoms, optionally containing chlorine and/or ether oxygen atoms. Suitable examples include BrCF₂-O-CF=CF₂, BrCF₂CF₂-O-CF=CF₂, Br CF₂CF₂CF₂-O-CF=CF₂, CF₃CFBrCF₂-O-CF=CF₂; ICF₂-O-CF=CF₂, ICF₂CF₂-O-CF=CF₂, ICF₂CF₂CF₂-O-CF=CF₂, CF₃CFICF₂-O-CF=CF₂);
(b) bromo- or iodo perfluoroolefins such as those having the formula:

   Z'-(Rf')ᵣ-CX=CX₂

   wherein each X independently represents H or F, Z' is Br or I, preferably I, and Rf' is a perfluoroalkylene containing from 1 to 12 carbon atoms, optionally containing chlorine atoms and r is 0 or 1; and
(c) non-fluorinated bromo and iodo-olefins such as vinyl bromide, 4-bromo-1-butene and 4-iodo-1-butene, and vinyl iodide.Specific examples include: bromotrifluoroethylene, 4-bromo-perfluorobutene-1, or bromofluoroolefins such as 1-bromo-2,2-difluoroethylene and 4-bromo-3,3,4,4-tetrafluorobutene-1, iodotrifluoroethylene, 4-iodo-perfluorobutene-1, or iodo-olefins such as but not limited to 1-iodo-2,2-difluoroethylene and 4-iodo-3,3,4,4-tetrafluorobutene-1.

Instead of or in addition to cure sites distributed along the polymer chain, the cure sites may be located in a terminal position of the polymer, for example as the result of using a suitable reaction initiator or a suitable chain transfer agent in the reaction medium during the polymer preparation, as described, for example, in EP 101 930 A1.

Examples of suitable chain transfer agents include those having the formula RfPₓ, wherein P is Br or I, Rf is a x-valent (per)fluoroalkyl radical having from 1 to 12 carbon atoms, optionally containing chlorine atoms, while x is 1 or 2. Specific examples include CF₂Br₂, Br(CF2)2Br, Br(CF₂)₄Br, CF₂ClBr, CF₃CFBrCF₂Br, I(CF₂)₂I, I(CF₂)₄I (Further examples of suitable chain transfer agents are disclosed, for example, in US Patent No. 4,000,356, EP 407 937 A1 and US Patent No. 4,243,770. Further examples of chain transfer agents include non-fluorinated chain transfer agents such as di-iodomethane or di-bromomethane.

Examples of useful initiators include those of the general formula X(CF₂)ₙSO₂Na with n=1 to 10 (where X is Br or I). Still further, the initiation and/or polymerization may be conducted in the presence of a halide salt such as a metal or ammonium halide including for example potassium chloride, sodium chloride, potassium bromide, ammonium bromide or chloride and potassium or sodium iodide to introduce a halide in a terminal position of the fluoropolymer.

Additionally, cure-site components may derive from nitrile containing monomers used in the polymerisation of the fluoropolymer. Examples of nitrile containing monomers include but are not limited to:
CF₂=CF-CF₂-O-Rf-CN ;
CF₂=CFO(CF₂)ᵣCN ; CF₂=CFO[CF₂CF(CF₃)O]ₚ(CF₂)ᵥOCF(CF₃)CN;
CF₂=CF[OCF₂CF(CF₃)]ₖO(CF₂)ᵤCN
wherein, r represents an integer of 2 to 12; p represents an integer of 0 to 4; k represents 1 or 2; v represents an integer of 0 to 6; u represents an integer of 1 to 6, Rf is a perfluoroalkylene or a bivalent perfluoroether group. Specific examples of nitrile containing fluorinated monomers include perfluoro (8-cyano-5-methyl-3,6-dioxa-1-octene), CF₂=CFO(CF₂)₅CN, and CF₂=CFO(CF₂)₃OCF(CF₃)CN.

The fluoropolymers can be made in accordance with any of the known polymerization methods for making fluoropolymers. Such methods include without limitation, aqueous emulsion polymerization, suspension polymerization and polymerization in an organic solvent. The fluoropolymer typically will have Mooney viscosities (ML1+10 at 120 °C) of 1 to 150 units, suitably 2 to 100 units or from 15 to 60 units. Mooney viscosities can be measured, for example, according to ASTM D 1646. The molecular weight distribution can be mono-modal, bi-modal or multi-modal.

### Dehydrofluorination agents:

The first layer and/or the second layer may not require the presence of a dehydrofluorination agent to provide sufficient bonding of the fluoropolymer layer to the silicone polymer layer. Therefore, the first or the second or both layers may be free of a dehydrofluorination agent or may be essentially free of a dehydrofluorination agent. "Essentially free of dehydrofluorination agent" means the amount of dehydrofluorination agent in the first and second or in the composition containing first and second composition may be greater than 0 but less than 0.01 parts per 100 parts of fluoropolymer. A dehydrofluorination agent is an agent that is capable to react with the fluoropolymer to generate a double bond in the fluoropolymer backbone, preferably at curing conditions, for example subjecting a fluoropolymer composition to a temperature of 120 °C to 200 °C for a period of 1 to 120 minutes. Examples of dehydrofluorination agents include organo-oniums, such as triphenylbenzyl phosphonium chloride, tributylallyl phosphonium chloride, tributylbenzyl ammonium chloride, tetrabenzyl ammonium bromide, triaryl sulfonium chloride, 8-benzyl-1,8-diazabicyclo[5.4.0]-7-undecenium chloride, benzyl tris(dimethylamino) phosphonium chloride, benzyl(diethylamino)diphenylphosphonium chloride, and bases such as 1.8 diaza[5.4.0]bicycle undec-7-ene (DBU) and 1,5-diazabicyclo[4.3.0]-5-nonene (DBN).

### Peroxide curing agents:

The peroxide curing agents typically comprise an organic peroxide. Suitable organic peroxides are those which generate free radicals at the temperatures used in the curing reaction (typically, temperatures of about 120 °C to about 200 °C, or from about 140 °C to about 180 °C). Dialkyl peroxides or bis(dialkyl peroxides) which decompose at a temperature above 50 °C are especially preferred. In many cases it is preferred to use a di-tertiarybutyl peroxide having a tertiary carbon atom attached to the peroxy oxygen. Among the most useful peroxides of this type are 2,5-dimethyl-2,5-di(tertiarybutylperoxy)hexyne-3 and 2,5-dimethyl-2,5-di(tertiarybutylperoxy)hexane. Other peroxides include, for example, dicumyl peroxide, dibenzoyl peroxide, tertiarybutyl perbenzoate, alpha, alpha'-bis(t-butylperoxy-diisopropylbenzene), and di[1,3-dimethyl-3-(t-butylperoxy)-butyl]carbonate. Generally, about 1 to 5 parts of peroxide curing agent per 100 parts of fluoropolymer are used. Peroxide curing agents are commercially available, for example, under the trade designations Perkadox, Luperco and Trigonox.

The peroxide curing agents may be used in combination with one or more coagents. The coagent may increase the curing speed and/or lower the curing temperature and/or improving the curing result. Typically, the coagent is composed of a polyunsaturated compound, such as diallyl, triallyl, polyallyl, divinyl, trivinyl and polyvinyl compounds. The coagents may be added in an amount of between about 0.1 and about 10 parts per hundred parts fluoropolymer, preferably between about 2 and about 5 parts per hundred parts fluoropolymer. Examples of useful coagents include triallyl cyanurate; triallyl isocyanurate; triallyl trimellitate; tri(methylallyl)isocyanurate; tris(diallylamine)-s-triazine; triallyl phosphite; N,N-diallyl acrylamide; hexaallyl phosphoramide; N,N,N',N'-tetraalkyl tetraphthalamide; N,N,N',N'-tetraallyl inalonamide; trivinyl isocyanurate; 2,4,6-trivinyl methyltrisiloxane; N,N'-m-phenylenebismaleimide; diallyl-phthalate and tri(5-norbornene-2-methylene)cyanurate. Particularly useful is triallyl isocyanurate. Other useful coagents include the bis-olefins disclosed in EP 0661304 A1 and EP 0769521 A1.

The peroxide curing agents are preferably contained in the composition to produce the first layer but may also be comprised in the composition to prepare the second layer or in both. It is also contemplated to introduce the peroxide curing agent in a separate composition which is placed between first and second composition or the first and second layers prior to curing.

### Silicone resins:

Typically, the one or more silicone resin contained in the second layer is a polysiloxane. A polysiloxane comprises repeating -Si-O-Si- units. Typically, the polysiloxanes comprise polydimethylsiloxane. The silicone resins are preferably curable or cured. The silicone-containing polymers may become elastic upon curing or their elastic properties may increase upon curing. Preferably, the curable or cured silicone-containing polymers (also referred to as "silicone resins or silicone rubbers") are elastomeric. The silicone-containing polymers may be curable by a peroxide curing reaction. Such peroxide curable silicone-containing polymers typically comprise methyl and/or vinyl groups. The same peroxide curing agents or combinations of peroxide curing agents and coagents as described above with respect to the peroxide-curable fluoropolymers may be used. The cross-link density of the cured silicone polymer may depend on both the vinyl or methyl level of the silicone polymer and the amount of curing agent. Peroxide curing agents are typically used in amount between 0.1 to 10 parts per hundred parts of the curable silicone polymer. Particularly suitable are levels between 0.5 to 3 parts per hundred parts of silicone polymer.

The peroxide curing agents that may be used in the second layer of the multi-layer article may be adjusted to the ones used in the first layer. The same or different agents may be used. For example, different agents which are activated at different temperatures can be used such that the fluoropolymer in the first layer may cure before or after the silicone polymer in the second layer. Peroxide curable silicone polymers are commercially available, for example under the trade designation Elastosil R 401/60 and Elastosil R 760/70 from Wacker Chemie AG.

The silicone-containing polymers may alternatively or in addition also be curable by use of metal containing compounds. This means they can be cured by a so-called addition curing system. In this system the polymers are cured by using a metal catalyst. Preferred metal catalysts include platinum containing compounds, especially platinum salts or platinum complexes having organic ligands or residues. The corresponding curable silicones are referred to as "platinum-curable". Silicone-containing polymers that are curable by metal compounds typically contain reactive groups such as vinyl groups.

The silicone polymer composition may also contain silicones comprising Si-H groups. Those silicones may act as cross-linkers.

Metal-curable silicone polymers can be used as a one-part silicone system or a two-part silicone system. One-part metal (platinum) curable silicone polymers are commercially available, for example, under the trade designation Elastosil R plus 4450/60 and Elastosil R plus 4110/70 from Wacker Chemie AG, Germany. In a two-part silicone system, also referred to as liquid silicone rubber (LSR), a vinyl-functional silicone polymer (typically identified as part A) may be vulcanised in presence of a silicone having Si-H groups (part B). Part A typically contains the platinum catalyst. Two-part platinum curable silicone systems are commercially available, for example under the trade designation Elastosil R 533/60 A/B and Elastosil LR 7665 from Wacker Chemie, AG and Silastic 9252/900P from Dow Corning. Examples of useful platinum catalysts are known in the art. The platinum catalyst is typically used in amounts between 2 and 200 ppm platinum.

In addition to the silicone resins the second layer may contain curing agents, catalysts and cross-linkers, including, for example, the peroxide curing agents and coagents described above. The silicone polymer layer may further include other additives including those described below.

### Carbon particles of mineralized carbon:

The articles provided herein contain in at least the first or the second or in both layers carbon particles of mineralized carbon. Such particles can be obtained from a mineralized carbon source, such as coal, through mining and grinding. The carbon particles of mineralized carbon include coal, graphite, coke and charcoal, preferably coal. Coal includes lignite, sub-bituminous coal, bituminous coal and anthracite. Charcoal and coke are obtained by heating coal in the absence of oxygen. Graphite is known as crystalline form of carbon and is also available from mining. For example, three different types of natural graphite are known, each occurring in different types of ore deposit, i.e. crystalline flake graphite, amorphous graphite and highly ordered pyrolytic graphite. The carbon particles from mineralized carbon as referred to herein are to be distinguished from carbon particles obtained by combustion a carbon source, such as hydrocarbons including tar, ethylene cracking tar, natural gas, and vegetable oil. Therefore, the carbon particles of mineralized carbon do not include soot or carbon blacks, including carbon black, acetylene black and ketchen black.

The carbon particles of mineralized carbon typically have a particle size of up to 8 micrometer, or of up to 3 micrometer. The mineralized carbon source can be ground and the fraction of the desired particle sizes can be obtained using sieves, for example of defined mesh size as known in the art. In one embodiment the carbon particles have a particle size in the range of from 3 to 8 micrometer, preferably in the range of from 4 to 7 micrometer. In one embodiment the particles have an average particle size of 3 to 8 micrometer, wherein the average is the number average. The average particle size may be determined for example, through laser diffraction using a laser reflection particle analyser from Microtac. The carbon particles may have a specific gravity in the range of from 1.0 to 1.5 g/cm³, preferably in the range of from 1.1 to 1.4 g/cm³.

In one embodiment the carbon particles of mineralized carbon are coal particles. The particles may have a content of volatiles according to ASTM D3175 of not more than 30 %, preferably not more than 25 %, and more preferably not more than 22 %. Preferably, the carbon particles have a Nitrogen Surface Area (B.E.T.) according to ASTM D3037 in the range of from 2 to 20 m²/g, preferably in the range of from 4 to 15 m²/g, and more preferably in the range of from 6 to 12 m²/g. The carbon particles may have a sulphur content according to ASTM D3177 in the range of from 0.1 to 1.5 %, preferably in the range of from 0.5 to 1.1 %. A typical example of suitable carbon particles according to the present disclosure are particles from bituminous coal. Bituminous coal is commercially available, for example, under the trade designation AUSTIN BLACK from Coal Fillers Incorporated, Bluefield, USA.

In general, the at least one first layer comprises the carbon particles of mineralized carbon in an amount of from 0.1 to 50 % wt., preferably, from 5 to 40 % wt, more preferably from 10 to 35 % wt. based on the weight of the layer. Preferably, the first layer comprises the carbon particle of mineralized carbon in an amount of from 0.1 parts to 50 parts per hundred parts fluoropolymer, more preferably in an amount of from 5 to 40 parts per hundred parts fluoropolymer, most preferably in the range of from 10 to 35 parts per hundred parts fluoropolymer.

Preferably, also the second layer comprises the carbon particles of mineralized carbon. In one embodiment the second layer comprise the particles in an amount of from 0.1 to 40 wt. % based on the weight of the second layer, preferably 0.1 to 40 parts per hundred parts silicone resin. Preferred amounts are 1 to 30 % wt, more preferred amounts are from 5 to 20 % wt. Preferably, the particles comprised in the second layer comprise bituminous coal. In one embodiment neither the first nor the layer contains carbon black or the first and second layers are essentially free of carbon black.

The first or the second layer or both may contain in addition to the carbon particles of mineralized carbon other carbon particles, including particles of other carbon sources, e.g. carbon blacks or other carbon particles obtained from the combustion of a carbon source. However, in one embodiment of the present disclosure the first layer does not contain any carbon blacks or is essentially free of carbon black, which means the first layer contains less than 5 % wt. preferably less than 1 wt. % more preferably less than 0.1 wt. % based on the weight of the first layer of carbon blacks.

### Additives:

The first or the second layer or both layers may contain additives in addition to the ingredients described above. Such additives include acid scavengers, fillers, processing aids, colourants, adhesion promoters, anti-oxidants and others as typically used in rubber compounding and processing of fluoropolymer and silicone resins.

Acid scavengers are typically inorganic oxides or hydroxides, preferably selected from alkali metal oxides and/or hydroxides and/or hydrotalcites, earth alkali metal oxides and/or hydroxides and/or hydrotalcite or rare earth oxides and/or hydroxides and/or hydrotalcites. Particular examples include Ca(OH)₂, Mg(OH)₂, La(OH)₃, CaO, MgO, La₂O₃, hydrotalcite, and any combinations thereof. In a preferred embodiment the first layer comprises at least one inorganic oxide, inorganic hydroxide or hydrotalcite or a combination thereof in an amount in the range of from 6 to 25 % weight based on the total weight of the layer, preferably 6 to 25 parts per hundred parts of fluoropolymer. In one embodiment the first layer contains from 7 to 20 % by weight based on the total weight of the layer or 7 to 20 parts per hundred parts fluoropolymer, preferably from 8 to 15 % wt or parts per hundred parts fluoropolymer of inorganic oxide, inorganic hydroxide or hydrotalcite or a combination thereof.

Particular examples of processing aids include epoxy resins, fatty acid salts (e.g. sodium stearate) and oxalate salts, and hydrocarbon oils like mineral oil or hydrocarbon waxes.

Particular examples of fillers include silica, in particular fumed silica, precipitated silica, titanium dioxide, calcium carbonate, magnesium oxide and ferric oxide.

### Preparation of multi-layer articles:

For preparing the layers the compositions for producing the layers containing the desired ingredients are prepared. The compositions to produce the layers as provided herein may be prepared by mixing one or more polymers with additional ingredients in conventional rubber processing equipment. Such equipment includes rubber mills, internal mixers, such as Banbury mixers, and mixing extruders. The resulting compositions may then be formed into sheets, layers or laminates or processed otherwise by means known in the art in processing fluoropolymer compounds and silicone resins.

It is further possible to prepare a so-called premix. The premix comprises the fluoropolymer(s) and part of other components for preparing the first layer formed into a layer, sheet or laminate, but not all of them. The composition of such a premix will depend on desired stability of the premix over a desired period of storage. For example, the premix may comprise the fluoropolymer(s), and one or more components of a peroxide curing system but not all of the components necessary to cure the composition. For example, it may be desired to exclude the peroxide curing agent from the premix and only add the peroxide at the time of shaping the first composition into the first layer.

A composition containing one or more peroxide curable silicone-containing polymers may be prepared, for example, by mixing the ingredients in conventional rubber processing equipment. Such equipment includes rubber mills, internal mixers, such as Banbury mixers, and mixing extruders. The two-part silicone compositions may be prepared by mixing part A with part B, and optionally other ingredients using common mixing means, such as a drum roller, a mechanical stirrer or a mixer.

Various different polymers may be used and also combinations of silicone polymer and fluoropolymers or silicone polymers containing fluorinated moieties may be used in the first or second layers or both layers.

The compositions to produce the layers are then formed into layers or sheets using standard equipment of polymer compounding and shaping, such as roll mills or extruders. To produce hoses, the compositions may be extruded. For example the composition for preparing the first layer may be extruded over the silicone layer or vice versa. The extrusion and formation of both layers may happen simultaneously or sequentially.

The first and second layers may be subjected to curing simultaneously or sequentially. For example, the layers may be formed and extruded onto each other and then the first layer is subjected to conditions where curing takes place. Then the second layer may be subjected to conditions where curing takes place, or both layers may be subjected to conditions where curing takes place simultaneously. It is also possible that the first layer is subjected to curing on a second layer that has been cured or has been partially cured. Typically the first layer is formed on the second layer and subjected to curing such that both layers form a common interface.

Preferably, the interface between the first and second layers of the multilayer article of the present disclosure has an initial peel strength in accordance with ASTM D-1876 of at least 2 N/mm², preferably at least 2.5 N/mm², more preferably of at least 3 N/mm² and even more preferably of at least 3.5 N/mm². In this connection, it is also preferred that the interface between the first and second layers of the multilayer composite article of the present disclosure has a peel strength in accordance with ASTM D-1876 after 21 days at a temperature in the range of from 200 to 240 °C of at least 0.5 N/mm², preferably of at least 1.0 N/mm², more preferably of at least 1.5 N/mm².

The multi-layered articles provided herein retain good adhesion over a prolonged period of time. In addition the bonds are maintained over an exposure to high temperatures. The multi-layered articles retain their flexibility over prolonged periods of exposure to high temperatures. Therefore, the articles provided herein are suitable for the preparation of hoses, in particular fuel-carrying hoses or hoses that may become exposed to hydrocarbon fumes, including turbo charger hoses.

In particular embodiments the multilayer articles provided herein form at least part of a multilayer hose, a container, a roller for a machine or a seal. Preferably the at least one first layer constitutes the innermost layer a hose, more preferably the innermost layer of a turbo charger hose. Turbo charger hoses are part of the system of a turbocharged combustion engine which accomplishes routing of the inlet gas compressed by the turbine driven by the exhaust gasses.

Multi-layer hoses can be made in which the first layer provided herein may form the innermost layer of the hose, which is bonded to the second layer as provided herein, which may form the outer layer of a two-layer hose or which may form an intermediate layer of a multi-layer hose having more than two layers. Multilayer hoses having more than two layers may contain additional layers of silicone resins or fluoropolymer resins or of different materials including reinforcement layers. In one embodiment the first layer does not form the innermost layer of a multilayer particle but forms an intermediate layer. In this case other fluoropolymer or different materials may be bonded to one side of the fluoropolymer layer while the other side of the fluoropolymer layer forms a common interface with the silicone resin.

The multilayer article provided herein can be produced by a method comprising
(a) providing the first layer as described herein;
(b) providing the second layer as described herein;
(c) forming a common interface between the layers;
(d) subjecting at least the first layer to curing.

The first layer in step (a) preferably comprises the fluoropolymer in its curable form and the one or more curing agents for curing the fluoropolymer, preferably comprising the peroxide curing agents described herein. The first layer may comprise some or all of the ingredients described herein and in the amounts as described herein.

The second layer in step (b) comprises the silicone resin. Preferably, the silicone resin is still curable, preferably it is peroxide curable.

The common interface may be formed, for example, by laminating the layers together through application of heat and pressure thus forming a multilayer article. Preferably, the common interface is formed by subjecting at least the first, preferably the first and second layer to conditions where curing occurs. This can be done simultaneously or sequentially. Through curing a common interface is formed bonding the layers together.

It may be desirable to further treat the resulting article, for example, with additional heat, pressure, or both in an optional post curing step (e), to enhance the bond strength between the layers (post curing). One way of supplying additional heat in step (e) when the multilayer article is prepared by extrusion in step (c) is by delaying the cooling of the multilayer article at the conclusion of the extrusion process. Alternatively, in step (c) additional heat energy can be added to the multilayer article by laminating or extruding the layers at a temperature higher than necessary for merely processing the components. As another alternative, the finished multilayer article can be held at an elevated temperature for an extended period of time in an optional step (e). For example, the finished article can be placed in a separate apparatus for elevating the temperature of the article such as an oven, an autoclave or heated liquid bath. Combinations of these methods can also be used.

### Examples

The present disclosure is further described without however wanting to limit the disclosure thereto. The following examples are provided to illustrate certain embodiments but are not meant to be limited in any way. Prior to that some test methods used to characterize materials and their properties will be described.

### Abbreviations:

Carbon black 1: MT N-990 available from Evonik
Carbon black 2: SRF N-774 available from Evonik
Coal particles: AUSTIN BLACK 325, bituminous coal powder, available from Coal Fillers Incorporated, USA
Filler: AEROSIL 200V Aerosil 200V: fumed silica, available from Evonik
ZnO: zinc oxide, available from Lanxess
MgO: Magnesium oxide, available from Lanxess
Ca(OH)₂: Calcium hydroxide, available from Lanxess
La₂O₃: Lanthanum oxide, available from Lanxess
Hydrotalcite: Hydrotalcite DHT - 4V, available from Kisuma Chemicals
TAIC (70%): triallyl-isocyanurate, 70% on silicate carrier, available from Lehmann & Voss
Curing Agent: TRIGONOX 101-50D: organic peroxide, 50% active on silica carrier, available from Akzo Nobel
Processing additive: STRUKTOL HT290; (blend of fatty acid derivatives and waxes), available from Schill + Seilacher
n.d.: not determined

### Methods

The adhesion between the two layers was evaluated in accordance with ASTM D-1876, commonly known as a 'T-peel' test, using the Instron® mechanical tester, in that the FKM outer areas were placed into the tensile tester. Cross-head speed was 50 mm/min. The results reported are the average values of at least three specimens. No post curing was applied to these laminates. Test results are evaluated as Separation force given in N/mm².

In all examples set forth below, the silicone resin used in the compositions to produce the second layers was Elastosil R 760/70/MH/C1/H3 from Wacker. Amounts are given in parts per hundred parts fluoropolymer and in parts per hundred parts silicone resin, respectively.

The glass transition temperature (Tg) can be measured by modulated temperature DSC. A Texas Instruments Q200 modulated DSC may be used applying the following measurement conditions: 150 °C to 50 °C at 2 °C / min, modulation amplitude of +1 °C/min during 60 sec.

### Examples 1 and comparative examples 1 and 2

Fluoroelastomer sheets were prepared by milling a composition with the ingredients shown in table 1 on a 2 roll mill to prepare sheets of about 3 mm thickness. Silicone resin sheets were prepared by milling the silicone resin on a 2 roll mill into a sheet of 3 mm thickness. A three layer article was formed by placing the silicone shee t between the two fluoropolymer sheets and subjecting the article to a temperature of 177°C for 30 minutes in a hot press (Agila 96/90). The resulting laminates had a thickness of about 5mm, were cooled at room temperature for 4 hours and were then cut into strips of 8 cm length. The laminates were postcured in a circulating air oven at 220 °C for the time indicated in table 2. The adhesive strength of the layers of the postcured sheet was determined. The results are shown in table 2.

**Table 1: Example 1 and comparative examples 1 and 2**

| | Example 1 | Comp. Ex. 1 | Comp. Ex. 2 |
|---|---|---|---|
| Peroxide curable FKM, 67 w % fluorine | 100 | 100 | 100 |
| Filler | 10 | 10 | 0 |
| Coal particles | 10 | 0 | 0 |
| Carbon black 2 | 0 | 10 | 0 |
| Carbon black 1 | 0 | 0 | 30 |
| Ca(OH)₂ | 3 | 3 | 3 |
| TAIC DL 70 % | 1 | 1 | 1 |
| Curing agent | 1 | 1 | 1 |
| Processing aid | 1 | 1 | 1 |

**Table 2: Separation forces.**

| | Separation force [N/mm²], initial | Separation force [N/mm²], 7 d at 220 °C | Separation force [N/mm²], 14 d at 220 °C | Separation force [N/mm²], 21 d at 220 °C |
|---|---|---|---|---|
| Example 1 | 3.1 | 2.8 | 2.1 | 1.2 |
| Comp. Ex. 1 | 2.2 | 1.7 | 0.6 | n.d. |
| Comp. Ex. 2 | 2.6 | 1.2 | 0.6 | n.d. |

The initial adhesive strength of example 1 was higher than that of the comparative examples 1 and 2 also after prolonged exposure to heat.

### Example 2 and comparative examples 3 and 4:

The previous examples were repeated except that the fluoropolymer compositions contained the ingredients as shown in table 3. The adhesive strength was determined as described above. The results are shown in table 4.

**Table 3: Example 2 and Comparative Examples 3 and 4**

| | Example 2 | Comp. Ex. 3 | Comp. Ex. 4 |
|---|---|---|---|
| Peroxide curable FKM, 67 w % fluorine | 100 | 100 | 100 |
| Coal particles | 30 | 0 | 10 |
| Carbon black 1 | 0 | 30 | 20 |
| Ca(OH)₂ | 3 | 3 | 3 |
| TAIC DL 70 % | 1 | 1 | 1 |
| Curing agent | 1 | 1 | 1 |
| Processing aid | 1 | 1 | 1 |

**Table 4: Separation forces.**

| | Separation force [N/mm²], initial | Separation force [N/mm²], 7 d at 220 °C | Separation force [N/mm²], 14 d at 220 °C |
|---|---|---|---|
| Example 2 | 3.4 | 3.3 | 2.6 |
| Comp. Ex. 3 | 2.7 | 1.2 | 0.6 |
| Comp. Ex. 4 | 3.5 | 1.8 | 2.1 |

Example 2 showed a better performance than comparative example 3. Comparative example 4 containing both bituminous coal powder and carbon black showed an initial adhesion of FKM and VMQ layers similar to example 2 but a greater decrease in adhesive strength upon prolonged exposure to heat.

### Examples 3 to 6:

In Examples 3 to 6 the previous experiments were repeated using fluoropolymer compositions with the ingredients shown in table 5. The samples were tested as described above. The results are shown in table 6 as separation force in N/mm².

**Table 5: Examples 3, 4, 5 and 6.**

| | Example 3 | Example 4 | Example 5 | Example 6 |
|---|---|---|---|---|
| Peroxide curable FKM, 67 w % fluorine | 100 | 100 | 100 | 100 |
| Filler | 10 | 10 | 10 | 10 |
| Coal particles | 10 | 10 | 10 | 10 |
| La₂O₃ | 5 | 8 | 3 | 0 |
| Ca(OH)₂ | 3 | 3 | 3 | 3 |
| TAIC DL 70 % | 1 | 1 | 1 | 1 |
| Curing agent | 1 | 1 | 1 | 1 |
| Processing aid | 1 | 1 | 1 | 1 |

**Table 6: Adhesion forces.**

| | initial | 7 d | 14 d | 21 d | 28 d | 35 d | 42 d |
|---|---|---|---|---|---|---|---|
| Example 3 | 4.4 | 4.1 | 3.4 | 3.5 | 3.5 | 3.1 | 2.5 |
| Example 4 | 3.7 | 3.8 | 3.8 | 3.5 | 3.0 | 2.9 | 3.2 |
| Example 5 | 2.5 | 2.2 | 2.5 | 2.7 | 1.8 | 0.1 | n.d. |
| Example 6 | 3.1 | 2.8 | 2.1 | 1.2 | 0.1 | n.d. | n.d. |

### Examples 7 to 9 and comparative example 5

5-layer articles where prepared as described for example 1 with each fluoroelastomer sheet sandwiched between two silicone sheets. The compositions used to prepare the sheets are shown in table 7. The samples were post cured and tested as described above but with different heat treatments. Test conditions and results are shown in tables 8 to 10 as separation force in N/mm².

**Table 7: Comparative examples 5 and examples 7, 8 and 9.**

| | Comp. Ex. 5 | Example 7 | Example 8 | Example 9 |
|---|---|---|---|---|
| **VMQ compound formulation** | | | | |
| Elastosil R 760/70/MH/C1/H3 | 100 | 100 | 100 | 100 |
| Carbon particles | 0 | 10 | 0 | 10 |
| | | | | |
| **FKM compound formulation** | | | | |
| Peroxide curable FKM, 67 w % fluorine | 100 | 100 | 100 | 100 |
| Filler | 0 | 0 | 6 | 6 |
| Coal particles | 0 | 0 | 10 | 10 |
| Carbon black 1 | 30 | 30 | 0 | 0 |
| Ca(OH)₂ | 3 | 3 | 10 | 10 |
| TAIC DL 70 % | 1 | 1 | 1 | 1 |
| Curing agent | 1 | 1 | 1 | 1 |
| Processing aid | 0.5 | 0.5 | 0.5 | 0.5 |

**Table 8: Comp. Ex. 5 and examples 7, 8 and 9 after post curing at 220 °C.**

| | initial | 7d | 14 d | 21 d | 28 d | 35 d | 42 d | 49 d |
|---|---|---|---|---|---|---|---|---|
| Comp. Ex. 5 | 2.0 | 1.8 | 1.7 | 1.2 | 0.7 | 0.4 | 0.1 | 0.1 |
| Example 7 | 3.9 | 3.2 | 2.4 | 1.9 | 1.4 | 0.8 | 0.1 | 0.1 |
| Example 8 | 2.9 | 3.3 | 3.6 | 3.3 | 2.9 | 2.3 | 1.7 | 1.2 |
| Example 9 | 2.9 | 3.0 | 3.1 | 2.9 | 2.7 | 2.3 | 1.8 | 1.3 |

**Table 9: Comp. Ex. 5 and examples 7, 8 and 9 after post curing at 230 °C.**

| | initial | 7 d | 14 d | 21 d | 28 d |
|---|---|---|---|---|---|
| Comp. Ex. 5 | 2.0 | 1.2 | 0.6 | 0.1 | 0.1 |
| Example 7 | 3.9 | 2.4 | 1.5 | 0.7 | 0.1 |
| Example 8 | 2.9 | 2.9 | 3.1 | 1.6 | 0.7 |
| Example 9 | 2.9 | 3.0 | 3.1 | 2.9 | 2.7 |

**Table 10: Comparative example 5 and examples 7, 8 and 9 after post curing at 240 °C.**

| | initial | 2 d | 4 d | 6 d | 8 d | 10 d | 12 d | 14d |
|---|---|---|---|---|---|---|---|---|
| Comp. Ex. 5 | 2.0 | 1.6 | 1.2 | 0.8 | 0.3 | 0.2 | 0.1 | 0.1 |
| Example 7 | 3.9 | 3.0 | 2.1 | 1.4 | 0.6 | 0.4 | 0.1 | 0.1 |
| Example 8 | 2.9 | 2.9 | 2.9 | 2.5 | 2.0 | 1.5 | 1.0 | 0.1 |
| Example 9 | 2.9 | 2.9 | 2.9 | 2.8 | 2.8 | 2.4 | 2.0 | 1.0 |

### Example 10 and comparative example 6

Test pieces were made having a thickness of 6 mm, a length of 70 mm and a width of 25 mm which consisted of a layer of 1 mm FKM laminated to a 5 mm VMQ layer. The VMQ layer consisted of the same VMQ as used in example 1. The FKM was produced from the compositions shown in table 11. The test pieces were put in an air circulating oven at temperatures of 220 °C up to 250 °C with 10 °C increments with their FKM layer facing down on a metal plate. After the times indicated in table 12 the samples were taken out of the oven and allowed to cool down at room temperature for 4 hours. To test the flexibility the samples subjected to longitudinal bending, back and forth to 180° whereby only the ends of the laminates were squeezed together. The samples were then visually inspected for defects. The results are summarized in table 12, wherein "flexible" denotes an article exhibiting full flexibility, "cracking" denotes a cracking of the VMQ layer of the article visible to the naked eye. In some experiments other defects were noticed which appear to be due to gas generation between the layers.

**Table 11: Comparative example 6 and example 10**

| | Comp. Ex. 6 | Example 10 |
|---|---|---|
| Peroxide curable FKM, 67 w % fluorine | 100 | 100 |
| Filler | 0 | 6 |
| Coal particles | 0 | 10 |
| Carbon black 1 | 30 | 10 |
| Ca(OH)₂ | 3 | 3 |
| TAIC DL 70 % | 1 | 1 |
| Curing agent | 1 | 1 |
| Processing aid | 0.5 | 0.5 |

| | Comp. Ex. 6 | Example 10 |
|---|---|---|
| Flexibility after 14 d at 220 °C | Flexible | flexible |
| Flexibility after 7 d at 230 °C | Flexible | flexible |
| Flexibility after 14 d at 230 °C | Flexible | flexible |
| Flexibility after 21 d at 220 °C | cracking | flexible |
| Flexibility after 4 d at 240 °C | Flexible | flexible |
| Flexibility after 8 d at 240 °C | Flexible | flexible |
| Flexibility after 12 d at 240 °C | Cracking and other defect | flexible |
| Flexibility after 14 d at 240 °C | Cracking and other defects | cracking |
| Flexibility after 2 d at 250 °C | Flexible | flexible |
| Flexibility after 4 d at 250 °C | Flexible | flexible |
| Flexibility after 6 d at 250 °C | Cracking and other defects | flexible |

### Example 11 and comparative example 7

### 2-layer Hoses

In example 11 a 2-layer hose was made by extruding a 3 mm VMQ layer over a 1 mm inner FKM layer. FKM layer was prepared from the composition of example 10. In comparative example 7 a layer hose was prepared in the same way using the composition of comparative example 6. The silicone resin was used as in example 1. These hoses were autoclave cured for 20 min at 177 °C and then cut in pieces of 22 cm length and the edges were cut off before post curing the samples at either 220 °C or 250 °C. After 1 and 2 week intervals the samples were allowed to cool down for 4 h at room temperature and were then bend by 180°. After 1 and 2 weeks at 220 °C, both samples (example 10 and comparative example 7) remained flexible without showing visible defects. However, after 1 week at 250 °C, the outer VMQ layer cracked upon bending. In contrast, the sample of example 10 remained flexible and did not crack upon bending. The hose of example 10 remained flexible without cracking even after exposure to 250 °C for 9 days.

## Claims

1. Multilayer article, comprising at least one first layer containing a fluoropolymer and at least one second layer containing a silicone resin, said layers are at least partially in contact with each other and form a common interface bonding the layers together, and wherein the at least one first layer further comprises carbon particles of mineralized carbon selected from graphite, coal, coke and charcoal and wherein the fluoropolymer is cured.

2. The multilayer article of claim 1, wherein the fluoropolymer is cured by a curing reaction comprising the use of a peroxide curing agent.

3. The multilayer article of claim 1 or 2, wherein the at least one second layer also comprises carbon particles of mineralized carbon selected from graphite, coal, coke and charcoal.

4. The multilayer article of any one of the preceding claims, wherein the at least one first layer further comprises at least one oxide or hydroxide, selected from alkali metal oxides, rare earth oxides, alkali metal hydroxides, rare earth hydroxides, preferably selected from Ca(OH)₂, Mg(OH)₂, La(OH)₃, CaO, MgO, La₂O₃, hydrotalcite, and combinations thereof.

5. The multilayer article of any one of the preceding claims, wherein the carbon particles have a density in the range of from 1.0 to 1.5 g/cm³.

6. The multilayer article of any one of the preceding claims wherein the carbon particles have a particle size between 3 and 8 micrometer.

7. The multilayer article of any one of the preceding claims, wherein the bond between the first and second layers has a peel strength in accordance with ASTM D-1876 of at least 0.5 N/mm² after 21 days at a temperature in the range of from 200 to 240 °C.

8. A multilayer hose comprising the multilayer article of any one of claims 1 to 7.

9. The multilayer hose of claim 8 wherein the interface between the first and second layers has a peel strength in accordance with ASTM D-1876 of at least 0.5 N/mm² after 21 days at a temperature in the range of from 200 to 240 °C.

10. The multilayer hose of claims 8 or 9 wherein the hose is a turbo charger hose.

11. Method for producing a multilayer article according to any one of claims 1 to 7 comprising:
(a) providing a first layer comprising a curable fluoropolymer, a curing agent for curing the fluoropolymer and carbon particles of mineralized carbon selected from graphite, coal, coke and charcoal;
(b) providing a second layer containing a silicone resin;
(c) contacting the layers to form a common interface between the layers bonding the layers;
(d) subjecting at least the first layer to curing.

12. The method according to claim 11 wherein the fluoropolymer is peroxide curable and the curing agent comprises a peroxide curing agent.

13. The method according to any one claims 11 to 12 wherein the multilayer article is a hose.

## Patentansprüche

1. Mehrschichtiger Artikel, umfassend mindestens eine erste Schicht enthaltend ein Fluorpolymer und mindestens eine zweite Schicht, enthaltend ein Silikonharz, wobei die Schichten mindestens teilweise in Kontakt miteinander sind und eine gemeinsame, die Schichten miteinander verbindende Grenzfläche bilden, und wobei die mindestens eine erste Schicht ferner Kohlenstoffteilchen aus mineralisiertem Kohlenstoff umfasst, ausgewählt aus Graphit, Kohle, Koks und Holzkohle, und wobei das Fluorpolymer gehärtet ist.

2. Mehrschichtiger Artikel nach Anspruch 1, wobei das Fluorpolymer durch eine Härtungsreaktion gehärtet wird, die die Verwendung eines Peroxid-Härtungsmittels umfasst.

3. Mehrschichtiger Artikel nach Anspruch 1 oder 2, wobei die mindestens eine zweite Schicht ebenfalls Kohlenstoffteilchen aus mineralisiertem Kohlenstoff, ausgewählt aus Graphit, Kohle, Koks und Holzkohle, umfasst.

4. Mehrschichtiger Artikel nach einem der vorstehenden Ansprüche, wobei die mindestens eine erste Schicht ferner mindestens ein Oxid oder Hydroxid umfasst, ausgewählt aus Alkalimetalloxiden, Oxiden der seltenen Erden, Alkalimetallhydroxiden, Hydroxiden der seltenen Erden, die vorzugsweise ausgewählt sind aus Ca(OH)₂, Mg(OH)₂, La(OH)₃, CaO, MgO, La₂O₃, Hydrotalcit, und Kombinationen davon.

5. Mehrschichtiger Artikel nach einem der vorstehenden Ansprüche, wobei die Kohlenstoffteilchen eine Dichte im Bereich von 1000 bis 1500 kg/m³ (1,0 bis 1,5 g/cm³) aufweisen.

6. Mehrschichtiger Artikel nach einem der vorstehenden Ansprüche, wobei die Kohlenstoffteilchen eine Teilchengröße von zwischen 3 und 8 Mikrometer aufweisen.

7. Mehrschichtiger Artikel nach einem der vorstehenden Ansprüche, wobei die Bindung zwischen der ersten Schicht und der zweiten Schicht eine Abziehfestigkeit gemäß ASTM D-1876 von mindestens 0,5 N/mm² nach 21 Tagen bei einer Temperatur im Bereich von 200 bis 240 °C aufweist.

8. Mehrschichtiger Schlauch, umfassend den mehrschichtigen Artikel nach einem der Ansprüche 1 bis 7.

9. Mehrschichtiger Schlauch nach Anspruch 8, wobei die Grenzfläche zwischen der ersten Schicht und der zweiten Schicht eine Abziehfestigkeit gemäß ASTM D-1876 von mindestens 0,5 N/mm² nach 21 Tagen bei einer Temperatur im Bereich von 200 bis 240 °C aufweist.

10. Mehrschichtiger Schlauch nach einem der Ansprüche 8 oder 9, wobei der Schlauch ein Turboladerschlauch ist.

11. Verfahren zur Herstellung eines mehrschichtigen Artikels nach einem der Ansprüche 1 bis 7, umfassend:
(a) Bereitstellen einer ersten Schicht, umfassend ein härtbares Fluorpolymer, ein Härtungsmittel zum Härten des Fluorpolymers und Kohlenstoffteilchen aus mineralisiertem Kohlenstoff, ausgewählt aus Graphit, Kohle, Koks und Holzkohle;
(b) Bereitstellen einer zweiten Schicht, enthaltend ein Silikonharz;
(c) Kontaktieren der Schichten unter Bildung einer gemeinsamen Grenzfläche zwischen den Schichten, die die Schichten verbindet;
(d) Durchführen von Härten mindestens der ersten Schicht.

12. Verfahren nach Anspruch 11, wobei das Fluorpolymer härtbares Peroxid ist und das Härtungsmittel ein Peroxid-Härtungsmittel umfasst.

13. Verfahren nach einem der Ansprüche 11 bis 12, wobei der mehrschichtige Artikel ein Schlauch ist.

## Revendications

1. Article multicouche, comprenant au moins une première couche contenant un fluoropolymère et au moins une deuxième couche contenant une résine de silicone, lesdites couches sont au moins partiellement en contact entre elles et forment une interface commune liant les couches ensemble, et dans lequel ladite au moins une première couche comprend en outre des particules de carbone d'un carbone minéralisé choisi parmi le graphite, le charbon, le coke et le charbon de bois et dans lequel le fluoropolymère est durci.

2. Article multicouche selon la revendication 1, dans lequel le fluoropolymère est durci par une réaction de durcissement comprenant l'utilisation d'un agent de durcissement peroxyde.

3. Article multicouche selon la revendication 1 ou 2, dans lequel ladite au moins une deuxième couche comprend également des particules de carbone d'un carbone minéralisé choisi parmi le graphite, le charbon, le coke et le charbon de bois.

4. Article multicouche selon l'une quelconque des revendications précédentes, dans lequel ladite au moins une première couche comprend en outre au moins un oxyde ou hydroxyde, choisi parmi des oxydes de métal alcalin, des oxydes de terres rares, des hydroxydes de métal alcalin, des hydroxydes de terres rares, choisis de préférence parmi Ca(OH)₂, Mg(OH)₂, La(OH)₃, CaO, MgO, La₂O₃, hydrotalcite, et des combinaisons de ceux-ci.

5. Article multicouche selon l'une quelconque des revendications précédentes, dans lequel les particules de carbone ont une masse volumique dans la plage allant de 1000 à 1500 kg/m³ (de 1,0 à 1,5 g/cm³).

6. Article multicouche selon l'une quelconque des revendications précédentes, dans lequel les particules de carbone ont une taille de particules entre 3 et 8 micromètres.

7. Article multicouche selon l'une quelconque des revendications précédentes, dans lequel la liaison entre les première et deuxième couches a une résistance au pelage en conformité avec ASTM D-1876 d'au moins 0,5 N/mm² après 21 jours à une température dans la plage allant de 200 à 240 °C.

8. Tuyau flexible multicouche comprenant l'article multicouche selon l'une quelconque des revendications 1 à 7.

9. Tuyau flexible multicouche selon la revendication 8, dans lequel l'interface entre les première et deuxième couches a une résistance au pelage en conformité avec ASTM D-1876 d'au moins 0,5 N/mm² après 21 jours à une température dans la plage allant de 200 à 240 °C.

10. Tuyau flexible multicouche selon les revendications 8 ou 9, dans lequel le tuyau flexible est un tuyau flexible de turbocompresseur.

11. Procédé de production d'un article multicouche selon l'une quelconque des revendications 1 à 7, comprenant :
(a) la fourniture d'une première couche comprenant un fluoropolymère durcissable, un agent de durcissement pour durcir le fluoropolymère et des particules de carbone d'un carbone minéralisé choisi parmi le graphite, le charbon, le coke et le charbon de bois ;
(b) la fourniture d'une deuxième couche contenant une résine de silicone ;
(c) la mise en contact des couches pour former une interface commune entre les couches liant les couches ;
(d) la soumission d'au moins la première couche à un durcissement.

12. Procédé selon la revendication 11, dans lequel le fluoropolymère est durcissable au peroxyde et l'agent de durcissement comprend un agent de durcissement peroxyde.

13. Procédé selon l'une quelconque des revendications 11 à 12, dans lequel l'article multicouche est un tuyau flexible.
